# EUROPEAN PATENT SPECIFICATION

(11) **EP 2 166 333 B1**
(45) Date of publication and mention of the grant of the patent: **25.01.2012**
(21) Application number: 08290887.2
(22) Date of filing: 19.09.2008
(51) Int. Cl.: G01M 17/08

(54) **Testable vibration monitoring device and method**
Prüfbare Vibrationsüberwachungsvorrichtung und -verfahren
Dispositif testable de suivi des vibrations et procédé

(43) Date of publication of application: 24.03.2010
(73) Proprietor: Bombardier Transportation GmbH, 10785 Berlin (DE)
(72) Inventor: Baert, Mike, 8200 Brügge (BE)
(74) Representative: Novagraaf Technologies

(56) References cited:
- EP-A- 1 197 739
- DE-A1- 4 316 263
- DE-A1- 10 020 519
- DE-A1- 10 020 520
- DE-A1- 10 020 521
- DE-A1- 10 062 602

## Description

### TECHNICAL FIELD OF THE INVENTION

The invention relates to a vibration monitoring device and more specifically to a testable vibration monitoring device for use in a severe environment, and in particular for monitoring the stability of a bogie of a rail vehicle. It also relates to a method for monitoring vibration with such a device and to a method for testing the operability of such a device.

### BACKGROUND ART

Conventional bogies are provided with passive stabilisation means like yaw dampers or friction plates, which counteract the tendency of the bogies to follow a sinusoidal path. These stabilisation means are also used to increase the speed - called "instability limit" - at which the rather smooth sinusoidal run deteriorates into bogie hunting, causing bad ride comfort, high forces between wheels and rails and eventually a risk of derailment.

To minimize the risk of hazardous run e.g. caused by defective yaw dampers, the TSI HS (Technical Specification of Interoperability - High-Speed) released by the European Commission contains the requirement to install a means on board of high-speed trains, which can detect instability in the bogie movement of a train.

An algorithm for detecting the running instability of bogies of rail passenger vehicles is defined in UIC leaflet 515.5. According to this algorithm, instability is detected whenever the lateral acceleration of the bogie frame above a predetermined threshold in the range of 4Hz to 8Hz presents more than a predetermined number (e.g. 6) of consecutive peaks above a predetermined threshold (e.g. 8 m/s²) with a predetermined period of time (e.g. 500 ms).

An instability monitoring system for a bogie is known from EP 1 197 739. The bogie is provided with two longitudinal accelerometers located on each side of a longitudinal centre plane of the bogie. Signals from the two accelerometers are compared and processed to determine if they differ by more than a predetermined amount, in which case an alarm signal is triggered.

A vibration monitoring system for a rail vehicle is known from the documents DE 100 20 519, DE 100 20 520 and DE 100 20 521. One or more accelerometers, preferably tri-axial accelerometers, are connected to a central signal processing unit located at a remote location on the train consist. While this type of configuration may prove adapted to the monitoring of specific vehicle subsystems like brakes, bogies or car bodies for diagnostic purposes, it does not provide the level of safety and reliability required for safety components. In particular, the transmission of the acceleration signals from the accelerometers to the remote processing unit may suffer from an insufficient signal to noise ratio. Moreover, the failure of one accelerometer or of the central signal processing unit may remain undetected.
An acceleration sensor self-test apparatus for diagnosing a vehicle airbag system is disclosed in DE4316263. The displacement of a mass caused by an applied acceleration is converted into an electrical signal to enable detection of the acceleration of a moving object. A force corresponding to a defined acceleration is applied to the mass for diagnostic testing on the basis of a diagnostic signal. A device for self diagnosis of the characteristics of the acceleration sensor evaluates the resulting sensor output. The force may be applied by electrostatic, electromagnetic means, or be caused by external vibration. The acceleration sensor may be capacitive or piezoresistive.

The existing attempts to implement an instability detection device are based on sensors (e.g. accelerometers) and a remote software-based processing unit, which lacks the ability to fulfil the safety and reliability requirements of CENELEC Standards EN 50126 - 50129 and hence cannot be certified as being safe. While the risk of instability is reduced by the installation of such devices, it cannot be brought down to 0, since an undetected malfunction of the monitoring device during unstable run is still possible.

### SUMMARY OF THE INVENTION

The foregoing shortcomings of the prior art are addressed by the present invention. According to one aspect of the invention, there is provided a vibration monitoring device having a reference axis and comprising two accelerometers fixed to a common support, each accelerometer comprising:
- an inertia mass movable parallel to the reference axis between an intermediate rest position and two opposite limits,
- an internal test circuit for moving the inertia mass from a rest position towards a first of the two opposite limits in one testable direction in the absence of vibration of the common support, and
- sensing means for delivering an acceleration signal corresponding to the motion of the inertia mass parallel to the reference axis, the acceleration signal containing a first signal portion corresponding to the motion of the inertia mass between the intermediate rest position and the first of the two opposite limits, and a second signal portion corresponding to the motion of the inertia mass between the intermediate rest position and the other of the two opposite limits,
wherein the testable directions of the two accelerometers are opposite to one another.

The use of two accelerometers adds redundancy to the system. Thanks to the specific arrangement of the accelerometers, it becomes possible to test the vibration monitoring device in two opposite directions and to use the first part of each signal, which can actually be tested, to reconstruct a complete acceleration signal or for monitoring or test purposes.

Testable accelerometers are well known in the art. The internal test circuit may include a capacitive plate cooperating with the inertia mass and connected to a test terminal, such that application of a DC voltage to the test terminal results in a motion of the inertia mass in the testable direction, which simulates a constant acceleration in that direction.

Preferably, the vibration monitoring device further comprises a signal processing unit for processing the acceleration signals delivered by the two accelerometers and for implementing an instability monitoring algorithm delivering an instability signal.

According to a preferred embodiment, the vibration monitoring device is further provided with a means for carrying out a test procedure comprising:
- activating the internal test circuit of the accelerometers to simulate an instability situation;
- carrying out the instability monitoring algorithm;
- delivering a positive test result if the instability monitoring algorithm delivers an instability signal and a negative test result otherwise.

The test signals generated by the accelerometers are used to test the operability of both the accelerometers and the instability monitoring algorithm. Advantageously, the means for carrying the test procedure includes a state machine.

According to a preferred embodiment, the instability monitoring algorithm monitors the first signal portions of the two acceleration signals, without taking into account the second signal portions of the two acceleration signals. In other words, the instability monitoring algorithm takes into account only the part of the acceleration signals that can actually be tested. Potential undetectable defects of the accelerometers in their non-testable direction will be without repercussions on the operability of the device.

According to a preferred embodiment, the signal processing units comprises a programmable logic device connected to the two accelerometers and provided with non-volatile logic blocks running simultaneously in parallel and implementing the instability monitoring algorithm. Thanks to the use of an hardware base, and singularly of a programmable logic device (PLD) for running the instability detection algorithm, the instability monitoring device can be assigned a Safety Integrity Level (SIL).

Preferably, the programmable logic device can be a field-programmable gate array (FPGA) or a complex programmable logic device (CPLD), which can be provided with a non-volatile erasable and reprogrammable memory such as a flash memory. Hence, there is no need for a configuration device to put the code into the PLD cells. The PLD is immediately operational after start-up.

According to a preferred embodiment, the instability monitoring algorithm includes:
- pre-processing the first acceleration signal
- detecting peaks of the pre-processed acceleration signal which are higher than a predetermined acceleration threshold in the testable direction,
- incrementing a counter if the time between two consecutive peaks is within a predetermined time window,
- activating the solid-state safety relay if the counter reaches or exceeds a predetermined counter threshold, and
- resetting the counter if no peak has been detected within a predetermined period of time.

This algorithm is based on the requirements defined in UIC leaflet 515.5. The time window has a lower limit (e.g. 150 ms) and an upper limit (e.g. 250 ms), which provide the equivalent in time of the limited bandwidth in the frequency spectrum considered in the standard.

Advantageously the pre-processing of the first acceleration signal includes processing the first acceleration signal through a low pass filter and a high pass filter. The low pass filter is used to eliminate high frequency noise, while the high pass filter is used to eliminate the DC offset experienced in curves or because of an inadequate positioning of the device.

Advantageously the two accelerometers are identical so that there is no need to pre-process the signals if they are to be compared or combined or if they are processed in parallel using parallel channels implementing identical logic blocks. For instance, identical accelerometers will have identical gain, so that the same threshold can be used for detecting the peaks of the acceleration signals from the two accelerometers.

According to another aspect of the invention, there is provided a bogie provided with a vibration monitoring device as described hereinbefore.

The invention, however, is not limited to the railway industry and its advantages are experienced in other systems or applications combining severe external conditions and high safety requirements.

According to a further aspect of the invention there is provided a method for monitoring vibration with a vibration monitoring device as defined hereinbefore, comprising carrying out an instability monitoring algorithm for delivering an instability signal. Preferably, the monitoring algorithm monitors the first signal portions of the two acceleration signals, without taking into account the second signal portions of the two acceleration signals.

Preferably, the method further includes a test procedure comprising:
- activating the internal test circuit of the accelerometers to simulate an instability situation;
- carrying out the instability monitoring algorithm;
- delivering a positive test result if the instability monitoring algorithm delivers an instability signal and a negative test result otherwise.

The method may also advantageously comprise, for each of the acceleration signals:
- pre-processing the acceleration signal to obtain a pre-processed acceleration signal including at least a first portion corresponding to the first portion of the acceleration signal,
- detecting peaks of the first portion of the pre-processed acceleration signal which are higher than a predetermined acceleration threshold.

The method may also comprise, for each of the acceleration signals:
- incrementing a counter if the time between two consecutive peaks is within a predetermined time window,
- delivering an instability signal if the counter reaches or exceeds a predetermined counter threshold, and
- resetting the counter if no peak has been detected within a predetermined period of time.

### BRIEF DESCRIPTION OF THE DRAWINGS

Other advantages and features of the invention will become more clearly apparent from the following description of specific embodiments of the invention given as non-restrictive example only and represented in the accompanying drawings in which:
- figure 1 is a block diagram of an instability monitoring device according to the invention;
- figure 2 illustrates a couple of a self-testable micro-electromechanical accelerometers of in the instability monitoring device of figure 1;
- figure 3A to 3K illustrate the processing of acceleration signal by the instability monitoring device of figure 1;
- figure 4A illustrates test circuits used for testing safety solid-state relays of the instability monitoring device of figure 1;
- figure 4B illustrates a variant of figure 4A; and
- figure 5A illustrates an instability monitoring system including a plurality of instability monitoring devices of the type illustrated in figure 1;
- figure 5B illustrates a variant of figure 5A.

### DETAILED DESCRIPTION OF VARIOUS EMBODIMENTS

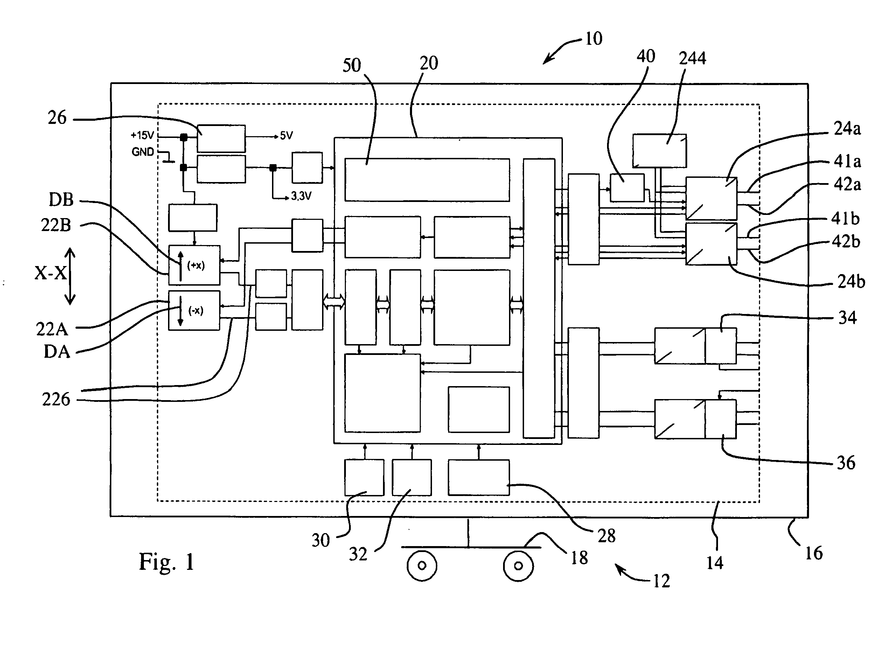

Referring to figure 1, an instability monitoring device 10 dedicated to the monitoring of the instability of a bogie 12 includes a printed circuit board 14 mounted in a box 16 fixed to a bogie frame 18. The circuit board 14 is built around a programmable logic device (PLD) 20 having two identical lateral accelerometers 22A, 22B as main inputs and two solid-state safety relays 24a, 24b as main outputs. The system is also equipped, besides the necessary power supply circuits 26, with a temperature sensor 28, a clock circuit 30, a watchdog circuit 32, an input for test demands 34 and outputs for indication of instability 36.

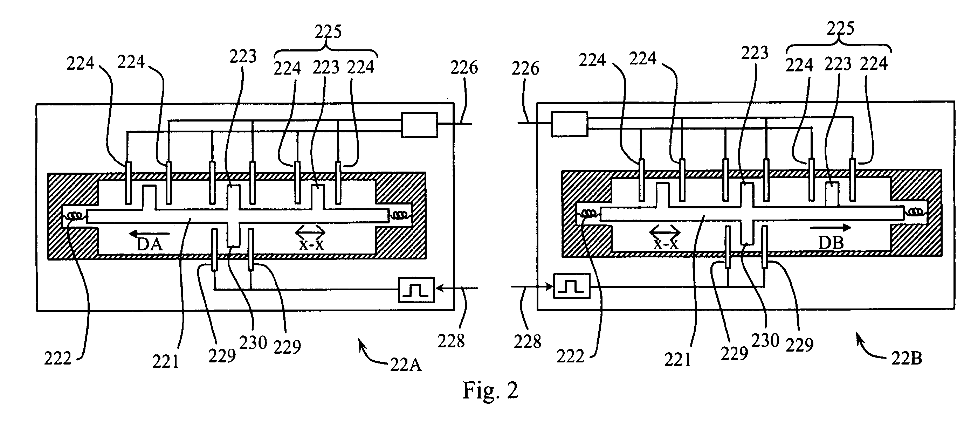

The two lateral acceleration sensors 22A, 22B, depicted in figure 2, are preferably of the MEMS (Micro-Electro-Mechanical System) type. This type of accelerometer is well-known in the art (e.g. reference SCA 1000 of VTI Technologies). The accelerometers 22A, 22B include an inertia mass in the form of a polysilicon beam 221 suspended over a substrate by supporting tethers 222. The beam 221, which is essentially parallel to the substrate, is elongated along a reference axis X-X, and provided with a number of plates 223 that extend away from the beam in a direction perpendicular to the axis of the beam. The beam and plates 223 are movable laterally relative to the substrate along the axis X-X. Each of these movable plates 223 is positioned between two polysilicon plates 224 that are perpendicular to the beam 221 and are fixed relative to the substrate. Each movable plate 223 and the fixed plates 224 on either side of the movable plate form a differential capacitor cell 225. The cells additively form a differential capacitor. Instead of polysilicon, the accelerometer may be made of other materials known in the art, such as monocrystalline silicon.

Different approaches can be used to sense acceleration with such a differential capacitor. The movable plates (i.e., movable with the mass) are each centred between two fixed plates in a rest position. All the fixed plates on one side of the movable plates are electrically coupled together and charged, and all the fixed plates on the other side of the movable plates are also electrically coupled together and charged. In response to an external force/acceleration along the reference axis, the mass with movable plates moves toward one or the other set of fixed plates, thus changing the capacitance between the different plates, which produces an electrical signal. This signal on the fixed plates is amplified, processed and provided to an output terminal 226.

To verify proper operation of the sensors 22A, 22B, a self-test input terminal 228 is provided. Activating self-test causes a step function force to be applied to the accelerometer 22 in a testable direction DA, DB parallel to the reference axis X-X. More specifically, activating the self-test via the self-test input terminal 228 causes the voltage on at least a pair of the fixed plates 229 on one side of the moving beam 221 in a test cell 231 to change. This creates an attractive electrostatic force on a test plate 230 integral with the movable beam 221, causing the beam 221 to move from the rest position toward in a testable direction. This sensor displacement in the testable direction changes the signal seen at the sensor output terminal 226.

Remarkably, the two identical accelerometers 22A, 22B are oriented in opposite directions on the printed circuit board, which means that their output have identical absolute instantaneous values and opposite signs when the printed circuit board is subjected to vibration. This also means that their reference axes X-X are aligned and that their testable directions DA, DB are opposite to one another.

The accelerometers 22A, 22B are connected to the programmable logic device PLD via an analog to digital converter A/DC. The programmable logic device can be a field-programmable gate array (FPGA) or a complex programmable logic device (CPLD). It is provided with non-volatile logic blocks running simultaneously in parallel and implementing an instability monitoring algorithm to change the state of the first and second solid-state relays from an active state to a fault state whenever an instability condition is detected.

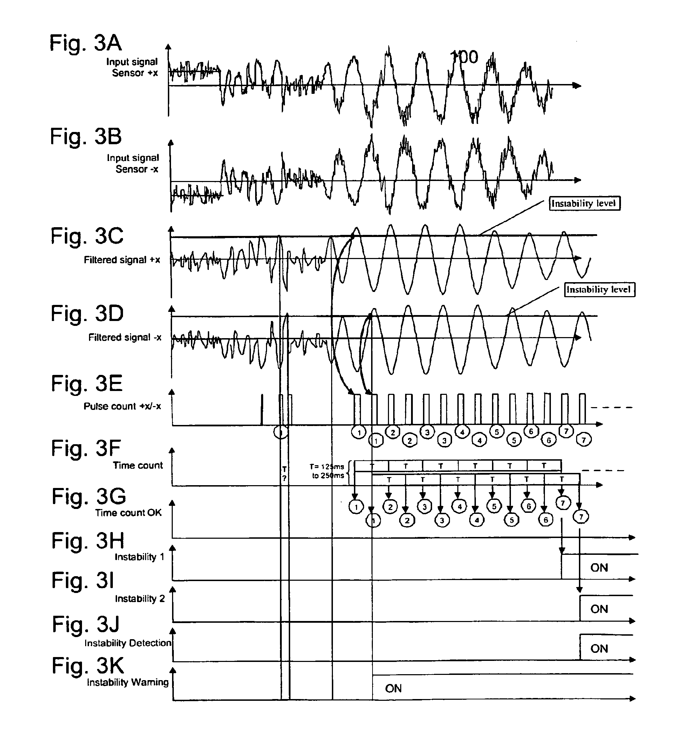

The digitalised acceleration signals from the first and second accelerometers, illustrated in figure 3A and 3B, respectively, are processed in parallel channels as depicted in figures 3C to 3K. When entering the programmable logic device, the digitalised acceleration signal of each accelerometer is first filtered using numerical band-pass filters. The band-pass filter consists of a low-pass and a high-pass second order Butterworth filters. The high-pass filter is used to eliminate signal offset. Its cutoff frequency (the -3dB frequency) is 3Hz. The low-pass filter has a cutoff frequency between 30 and 40 Hz to eliminate noise. The resulting filtered signals are shown in figure 3C and 3D. Peaks of the filtered signals above a predetermined threshold are detected as illustrated in figure 3E. The threshold is set for each accelerometer 22A, 22B in the direction corresponding to the corresponding testable direction DA, DB (i.e. a positive threshold in this example). Peaks of each acceleration signal in the direction opposite to the testable direction are not taken into account. Starting from zero, a counter is incremented for each accelerometer when consecutive peaks are detected within a predetermined time window, e.g. when two consecutive peaks are distant from one another by more than 125 ms and less than 250 ms, as illustrated in figure 3F. More precisely, a timer is started after each incrementation of the counter. If the time between the last counted peak and the new peak (measured by the timer) is less than 120 ms or more than 250 ms but less than 500 ms, the counter is not updated. The counter and the timer are reset to 0 if no peak has been detected during a period T=500 ms after the last peak or if peaks less than 125ms or more than 250ms apart are detected after the period of 500ms. An instability signal is delivered whenever the counter reaches N for one accelerometer as illustrated in figure 3H and 3I, in which case the timer and counter are also reset. An instability detection signal is delivered when an instability signal is detected for both accelerometers, as illustrated in figure 3J. A warning signal can also be delivered at an earlier stage, e.g. as soon as the first or second peak is detected on both channels, as illustrated in figure 3K. Remarkably, the algorithm used for detecting instabilities uses only one part of each acceleration signal, namely the part that corresponds to the testable direction of each accelerometer.

Each safety solid-state relay 24a, 24b is provided with two output terminals 41 a, 42a, 41 b, 42b and is designed to change its state from an active state to a fault state upon change of the corresponding control signal on a control input terminal. The first and second solid-state relays 24a, 24b act as "normally open" contacts, which means that they are closed when energised and open in the absence of control signal. More specifically, an AC control signal of predetermined frequency (e.g. 1000 Hz) is supplied by the programmable logic device 20 to a frequency detector 40 connected to the first solid-state relay 24a in the absence of instability to maintain the first solid-state relay in its active, closed state. In the same circumstances, a DC control signal is supplied by the programmable logic device 20 to the second solid-state relay 24b to maintain it in the closed state. The detection of instability triggers the interruption of the two control signals and the opening of the two safety solid-state relays 24a, 24b.

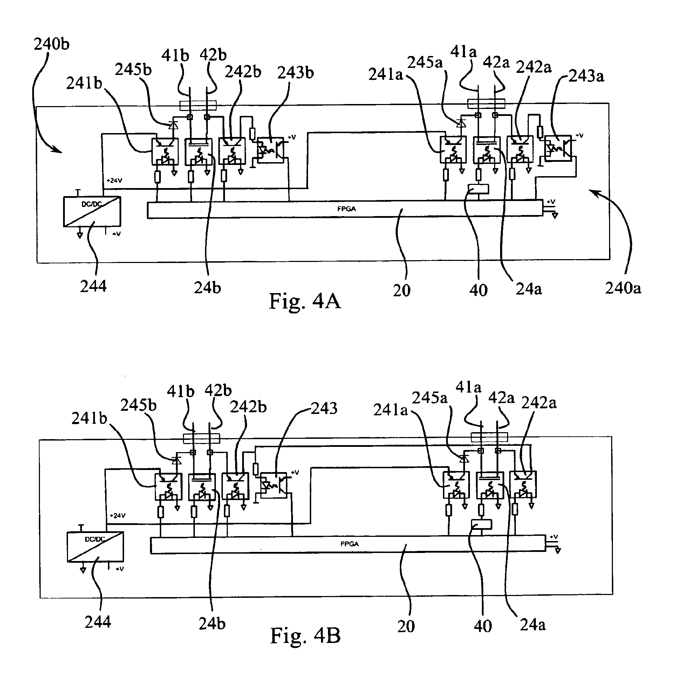

Referring to figure 4A, the solid-state relay 24a is provided with a local test circuit 240a including two test switches 241 a, 242a and a test current detector 243a. An upstream branch of the local test circuit 240a connects one of the test switches 241 a in series between one terminal 41 a of the solid-state relay and the positive terminal a local test DC power supply 244. A diode 245a can be provided in the upstream branch to prevent current backflow into the local test power supply. The downstream branch of the local test circuit connects the other output terminal 42a of the solid-state relay to the second test switch 242a and the latter to the test current detector 243a which is connected to the ground defined by the negative terminal of the local test power supply 244 to close the circuit. The current detector 243a is used to detect the presence of current through the terminals 41 a, 42a of the solid-state relay when the first and second test switches 241 a, 242a are closed as well as the solid-state relay. The second solid-state relay 24b is provided with a similar test circuit using the same power supply 244, and the corresponding parts have been designated in figure 4A with the same reference numbers, using a "b" as suffix instead of "a". As shown in the variant of figure 4B, a common current detector 243 can be used instead of two separate current detectors 243a and 243b.

The solid-state relays 24a, 24b, the pairs of test switches 241, 242 and the current detector 243 are connected to the programmable logic device 20 and are realised as optocouplers so that their connections to the programmable logic device 20 are fully isolated from their connections to the test circuit.

The programmable logic device 20 is also provided with a finite state machine 50 (see figure 1) for performing a series of tests for checking the operability of the instability monitoring device.

In a first test sequence, the switching of the solid-state relays is checked. The programmable logic device 20 closes the test switches 241, 242 of the first solid-state relay 24a and interrupts the AC control signal for a predetermined duration while the response of the first solid-state relay 24a is checked by the test current detector 243. If a current is detected by the test current detector 243 during the interruption of the AC control signal the test has failed and the state machine goes to the start-up fault state. Subsequently, the test is repeated for the second solid-state relay 24b, with the appropriate DC control signal being interrupted and switched back ON by the programmable logic device.

In a second test sequence, the internal test circuits of the accelerometers are used to simulate a test pattern that corresponds to an instability situation. A series of N voltage pulses is applied to the test terminals of the two accelerometers. The two accelerometers should then react with 80% of their full scale value and generate N peaks above the detection threshold. After N peaks, the instability monitoring algorithm should generate an instability signal and trigger the two solid-state switches. If no instability signal is generated, the test has failed and the state machine 50 goes to the start-up fault state.

Remarkably, the use of two accelerometers 22A, 22B oriented in opposite directions in each instability monitoring device makes it possible to selectively detect in the actual monitoring algorithm the peaks of each accelerometer signal that corresponds to movements of the inertia mass from the rest position in the testable direction, which has actually been tested. In other words, the peak threshold of the algorithm is set so that the peaks of the accelerometer signal in the direction opposite to the testable direction, i.e. the direction for which the internal test circuit of the accelerometer do not allow testing, are disregarded.

The instability monitoring devices may include other tests, e.g. temperature measurements. The temperature measured by a temperature sensor is compared with lower and upper limits (e.g. between -40 and 95 °C). If the temperature is not within the predefined window, an alarm is triggered.

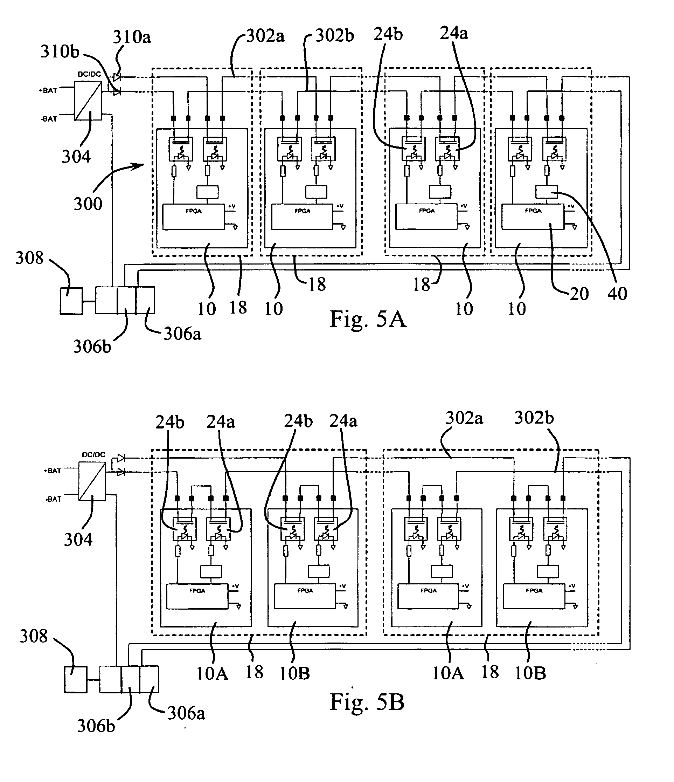

As illustrated in figure 5A, the instability monitoring device is duplicated on at least some of the bogie frames 18 of the rail vehicle, and preferably on all bogies, to build an instability monitoring system 300, which includes two safety loops 302a, 302b, one for connecting the first safety relays 24a of the instability monitoring devices 10 in series in a closed circuit including a DC power supply, e.g. a battery unit 304 and a common current detector 306a connected to an alarm 308 in the driver's cab, to a speed control system and/or to a brake control system of the vehicle, and the second one (302b) for connecting in the same conditions the second safety relays 24b of the instability monitoring devices 10 in series between the power supply 304 and a current detector 306b. Diodes 310a, 310b are also provided on the safety loops to prevent current backflow into the DC power supply 304.

Any interruption of the current detected a current detector 306a, 306b in the safety loop is considered as an instability event and results in appropriate action, e.g. operation of the alarm 308, decrease of the driving power and/or operation of the brakes of the rail vehicle.

The ground of each local test DC power supply 244 is isolated, so that the first test sequence referred to above can be carried out simultaneously on all first safety relays 24a, with superposition of the DC power of the safety loop 302a. However, the first and second safety relays of each unit should preferably be tested sequentially to avoid unreliable results, since it is envisaged that both safety loops are connected in series.

The instability monitoring system is provided with a test bus for performing controlling the start-up tests various tests on the distributed system to check its operability. The test bus is used to send test request to the instability monitoring device and gather the results.

To test the integrity of the safety loop cabling in a configured train, a special vehicle test can be executed. The instability monitoring devices of the last car shall be shutdown and powered again by means of the circuit-breaker of the rail car. This action will open and close the safety loop at this location and this will be verified in the driver's cab. If this test is positive it is considered that the whole safety loop is working. If not, the action shall be repeated on the instability monitoring device which is located directly upstream and this until the error is found. In such a case, the error in the cabling will be situated between the unit for which the loop is functioning and the next unit downstream.

As a variant, the two safety loops can be connected in series between a common power supply and a common current detector.

To limit availability problems in case of failure of one of the instability monitoring devices, it is also envisaged to provide each bogie with a first instability monitoring device 10A and a second instability monitoring device 10B, as illustrated in figure 5B. The safety relays 24a and 24b of each instability monitoring device are connected in series. The safety relays 24a, 24b of the first instability monitoring devices 10A are connected to a first safety loop 302A and the safety relays 24a, 24b of the second instability monitoring devices are connected to a second safety loop 302B. When one instability monitoring device is in failure and interrupts one of the safety loops, operation can be continued on the other safety loop.

The invention is not limited to the embodiments described hereinbefore.

The accelerometer or accelerometers can be biaxial or triaxial, in which case the signal from the additional axes can be simply disregarded or processed in parallel with the signal from the first axis. The signals from different axes can also be combined to build an acceleration vector, which will be processed by the programmable logic device. The accelerometers can be of any convenient type, e.g. based on piezoelectric transducers.

The instability monitoring algorithm can have many variants. In particular, the use of a time window with a lower and an upper threshold for counting the peaks can be replaced by more sophisticated numerical filters for disregarding the parts of the signal that are not in the observed frequency range.

Instead of processing the signals from the two accelerometers in parallel, the first part of the two signals can be combined to form a new acceleration signal.

If redundancy of the safety solid-state relays is not critical, one option is to eliminate one of the two solid-state relays, in which case the instability monitoring system will be provided with one safety loop only.

The instability monitoring system, which has been used in connection with a rail vehicle, can also implemented in various complex systems in which distributed acceleration measurements are necessary to determine an instability condition, e.g. aircrafts or turbines of a power plant.

## Claims

1. A vibration monitoring device (10) having a reference axis (X-X) and comprising two accelerometers (22A, 22B) fixed to a common support (14), each accelerometer comprising:
- an inertia mass (221) movable parallel to the reference axis between an intermediate rest position and two opposite limits,
- an internal test circuit for moving the inertia mass from a rest position towards a first of the two opposite limits in one testable direction (DA, DB) in the absence of vibration of the common support, and
- sensing means (225) for delivering an acceleration signal corresponding to the motion of the inertia mass parallel to the reference axis, the acceleration signal containing a first signal portion corresponding to the motion of the inertia mass between the intermediate rest position and the first of the two opposite limits, and a second signal portion corresponding to the motion of the inertia mass between the intermediate rest position and the other of the two opposite limits,
**characterized in that** the testable directions (DA, DB) of the two accelerometers are opposite to one another.

2. The vibration monitoring device of claim 1, further comprising a signal processing unit (20) for processing the acceleration signals delivered by the two accelerometers and for implementing an instability monitoring algorithm delivering an instability signal.

3. The vibration monitoring device of claim 2, further provided with a means for carrying out a test procedure comprising:
- activating the internal test circuit of the accelerometers to simulate an instability situation;
- carrying out the instability monitoring algorithm;
- delivering a positive test result if the instability monitoring algorithm delivers an instability signal and a negative test result otherwise.

4. The vibration monitoring device of claim 3, wherein the means for carrying the test procedure includes a state machine (50).

5. The vibration monitoring device of any one of claims 2 to 4, wherein the instability monitoring algorithm monitors the first signal portions of the two acceleration signals, without taking into account the second signal portions of the two acceleration signals.

6. The vibration monitoring device of any one of claims 2 to 5, wherein the signal processing unit comprises a programmable logic device (20) connected to the two accelerometers (22A, 22B) and provided with non-volatile logic blocks running simultaneously in parallel and implementing the instability monitoring algorithm.

7. The vibration monitoring device of claim 6, wherein the programmable logic device is a field programmable gate array (FPGA) or a complex programmable logic device (CPLD).

8. The vibration monitoring device of claim 6 or claim 7, wherein the programmable logic device includes a non-volatile erasable and reprogrammable memory.

9. The vibration monitoring device of any one of claims 2 to 8, wherein the instability monitoring algorithm includes:
- pre-processing the first acceleration signal,
- detecting peaks of the pre-processed acceleration signal which are higher than a predetermined acceleration threshold in the testable direction,
- incrementing a counter if the time between two consecutive peaks is within a predetermined time window,
- activating the solid-state safety relay if the counter reaches or exceeds a predetermined counter threshold, and
- resetting the counter if no peak has been detected within a predetermined period of time.

10. The vibration monitoring device of claim 9, wherein the pre-processing of the first acceleration signal includes processing the first acceleration signal through a low pass filter and a high pass filter.

11. The vibration monitoring device of any one of the preceding claims, wherein the two accelerometers (22A, 22B) are identical.

12. A bogie provided with a vibration monitoring device according to any one of claims 1 to 11.

13. A method for monitoring vibration with a vibration monitoring device according to any one of claims 1 to 11, comprising carrying out an instability monitoring algorithm for delivering an instability signal, **characterised in that** the monitoring algorithm monitors the first signal portions of the two acceleration signals, without taking into account the second signal portions of the two acceleration signals.

14. A method for monitoring vibration with a vibration monitoring device according to any one of claims 1 to 11, comprising carrying out an instability monitoring algorithm for delivering an instability signal, and in particular a method according to claim 13, **characterised in that** it further comprises a test procedure comprising:
- activating the internal test circuit of the accelerometers to simulate an instability situation;
- carrying out the instability monitoring algorithm;
- delivering a positive test result if the instability monitoring algorithm delivers an instability signal and a negative test result otherwise.

15. A method for monitoring vibration with a vibration monitoring device according to any one of claims 1 to 11, comprising carrying out an instability monitoring algorithm for delivering an instability signal, and in particular a method according to claim 13 or 14, **characterised in that** it further comprises, for each of the acceleration signals:
- pre-processing the acceleration signal to obtain a pre-processed acceleration signal including at least a first portion corresponding to the first portion of the acceleration signal,
- detecting peaks of the first portion of the pre-processed acceleration signal which are higher than a predetermined acceleration threshold.

16. A method for monitoring vibration with a vibration monitoring device according to any one of claims 1 to 11, comprising carrying out an instability monitoring algorithm for delivering an instability signal, and in particular a method according to any one of claims 13 to 15, **characterised in that** it further comprises,
for each of the acceleration signals:
- incrementing a counter if the time between two consecutive peaks is within a predetermined time window,
- delivering an instability signal if the counter reaches or exceeds a predetermined counter threshold, and
- resetting the counter if no peak has been detected within a predetermined period of time.

## Patentansprüche

1. Vibration-Überwachungsvorrichtung (10) mit einer Bezugsachse (X-X) und mit zwei Beschleunigungsmessern (22A, 22B), die an einem gemeinsamen Träger (14) befestigt sind, wobei jeder Beschleunigungsmesser umfasst:
- eine Trägheitsmasse (221), die zwischen einer intermediären Ruheposition und zwei entgegengesetzten Grenzen parallel zur Bezugsachse bewegbar ist,
- eine interne Testschaltung zum Bewegen der Trägheitsmasse von einer Ruheposition in Richtung einer ersten der zwei entgegengesetzten Grenzen in einer prüfbaren Richtung (DA, DB) bei Nichtvorhandensein einer Vibration des gemeinsamen Trägers, und
- eine Abtasteinrichtung (225) zum Liefern eines Beschleunigungssignals, das mit der Bewegung der Trägheitsmasse parallel zu der Bezugsachse korrespondiert, wobei das Beschleunigungssignal einen ersten Signalabschnitt enthält, der mit der Bewegung der Trägheitsmasse zwischen der intermediären Ruheposition und der ersten der zwei entgegengesetzten Grenzen korrespondiert, und einen zweiten Signalabschnitt, der mit der Bewegung der Trägheitsmasse zwischen der intermediären Ruheposition und der anderen der zwei entgegengesetzten Grenzen korrespondiert,
**dadurch gekennzeichnet, dass** die prüfbaren Richtungen (DA, DB) der zwei Beschleunigungsmesser entgegengesetzt zueinander sind.

2. Vibration-Überwachungsvorrichtung nach Anspruch 1, ferner mit einer Signalverarbeitungseinheit (20) zum Verarbeiten der durch die zwei Beschleunigungsmesser gelieferten Beschleunigungssignale und zum Implementieren eines Instabilität-Überwachungsalgorithmus, welcher ein Instabilitätssignal liefert.

3. Vibration-Überwachungsvorrichtung nach Anspruch 2, ferner versehen mit einer Einrichtung zum Ausführen einer Testprozedur, umfassend:
- Aktivieren der internen Testschaltung der Beschleunigungsmesser, um eine Instabilitätssituation zu simulieren;
- Ausführen des Instabilität-Überwachungsalgorithmus;
- Liefern eines positiven Testergebnisses, falls der Instabilität-Überwachungsalgorithmus ein Instabilitätssignal liefert, und andernfalls eines negativen Testergebnisses.

4. Vibration-Überwachungsvorrichtung nach Anspruch 3, in welcher die Einrichtung zum Ausführen der Testprozedur eine Zustandsmaschine (50) umfasst.

5. Vibration-Überwachungsvorrichtung nach einem der Ansprüche 2 bis 4, in welcher der Instabilität-Überwachungsalgorithmus die ersten Signalabschnitte der zwei Beschleunigungssignale überwacht, ohne die zweiten Signalabschnitte der zwei Beschleunigungssignale zu berücksichtigen.

6. Vibration-Überwachungsvorrichtung nach einem der Ansprüche 2 bis 5, in welcher die Signalverarbeitungseinheit eine programmierbare Logikeinrichtung (20) umfasst, die mit den zwei Beschleunigungsmessern (22A, 22B) verbunden ist und mit nicht flüchtigen logischen Blöcken versehen ist, welche simultan parallel laufen und den Instabilität-Überwachungsalgorithmus implementieren.

7. Vibration-Überwachungsvorrichtung nach Anspruch 6, in welcher die programmierbare Logikeinrichtung ein Universalschaltkreis (FPGA) oder ein komplex programmierbares logisches Bauteil (CPLD) ist.

8. Vibration-Überwachungsvorrichtung nach Anspruch 6 oder Anspruch 7, in welcher das programmierbare logische Bauteil einen nicht flüchtigen löschbaren und neu programmierbaren Speicher enthält.

9. Vibration-Überwachungsvorrichtung nach einem der Ansprüche 2 bis 8, in welcher der Instabilität-Überwachungsalgorithmus umfasst:
- Vorverarbeiten des ersten Beschleunigungssignals,
- Detektieren von Signalspitzen des vorverarbeiteten Beschleunigungssignals, welche höher sind als ein vorbestimmter Beschleunigungsschwellenwert in der prüfbaren Richtung,
- Inkrementieren eines Zählers, falls die Zeit zwischen zwei aufeinanderfolgenden Signalspitzen innerhalb eines vorbestimmten Zeitfensters liegt,
- Aktivieren des kontaktlosen Sicherheitsschaltgerätes, falls der Zähler den vorbestimmten Zähler-Schwellenwert erreicht oder übersteigt, und
- Zurücksetzen des Zählers, falls innerhalb einer vorbestimmten Zeitspanne kein Spitzenwert erfasst wurde.

10. Vibration-Überwachungsvorrichtung nach Anspruch 9, in welcher das Vorverarbeiten des ersten Beschleunigungssignals ein Verarbeiten des ersten Beschleunigungssignals über einen Tiefpassfilter und einen Hochpassfilter umfasst.

11. Vibration-Überwachungsvorrichtung nach einem der vorhergehenden Ansprüche, in welcher die zwei Beschleunigungsmesser (22A, 22B) identisch sind.

12. Fahrwerk, versehen mit einer Vibration-Überwachungsvorrichtung nach einem der Ansprüche 1 bis 11.

13. Verfahren zum Überwachen einer Vibration mit einer Vibration-Überwachungsvorrichtung nach einem der Ansprüche 1 bis 11, umfassend ein Ausführen eines Instabilität-Überwachungsalgorithmus zum Liefern eines Instabilitätssignals, **dadurch gekennzeichnet, dass** der Überwachungsalgorithmus die ersten Signalabschnitte der zwei Beschleunigungssignale überwacht, ohne die zweiten Signalabschnitte der zwei Beschleunigungssignale zu berücksichtigen.

14. Verfahren zum Überwachen einer Vibration mit einer Vibration-Überwachungsvorrichtung nach einem der Ansprüche 1 bis 11, umfassend ein Ausführen eines Instabilität-Überwachungsalgorithmus zum Liefern eines Instabilitätssignals und insbesondere ein Verfahren nach Anspruch 13, **dadurch gekennzeichnet, dass** dieses ferner eine Testprozedur umfasst, umfassend:
- Aktivieren der internen Testschaltung der Beschleunigungsmesser, um eine Instabilitätssituation zu simulieren;
- Ausführen des Instabilität-Überwachungsalgorithmus;
- Liefern eines positiven Testergebnisses, falls der Instabilität-Überwachungsalgorithmus ein Instabilitätssignal liefert, und andernfalls eines negativen Testergebnisses.

15. Verfahren zum Überwachen einer Vibration mit einer Vibration-Überwachungsvorrichtung nach einem der Ansprüche 1 bis 11, umfassend ein Ausführen eines Instabilität-Überwachungsalgorithmus zum Liefern eines Instabilitätssignals und insbesondere ein Verfahren nach Anspruch 13 oder 14, **dadurch gekennzeichnet, dass** dieses ferner für jedes der Beschleunigungssignale umfasst:
- Vorverarbeiten des Beschleunigungssignals, um ein vorverarbeitetes Beschleunigungssignal zu erhalten, das wenigstens einen ersten Abschnitt enthält, das mit dem ersten Abschnitt des Beschleunigungssignals korrespondiert,
- Detektieren von Signalspitzen des ersten Abschnitts des vorverarbeiteten Beschleunigungssignals, welche höher sind als ein vorbestimmter Beschleunigungsschwellenwert.

16. Verfahren zum Überwachen einer Vibration mit einer Vibration- Überwachungsvorrichtung nach einem der Ansprüche 1 bis 11, umfassend ein Ausführen eines Instabilität- Überwachungsalgorithmus zum Liefern eines Instabilitätssignals und insbesondere ein Verfahren nach einem der Ansprüche 13 bis 14, **dadurch gekennzeichnet, dass** dieses ferner um jedes der Beschleunigungssignale umfasst:
- Inkrementieren eines Zähler, falls die Zeit zwischen zweit aufeinanderfolgenden Signalspitzen innerhalb eines vorbestimmten Zeitfensters liegt,
- Liefern eines Instabilitätssignals, falls der Zähler einen vorbestimmten Zählerschwellenwert erreicht oder übersteigt, und
- Zurücksetzen des Zählers, falls keine Signalspitze innerhalb einer vorbestimmten Zeitspanne detektiert wurde.

## Revendications

1. Dispositif de suivi de vibrations (10) ayant un axe de référence (X-X) et comprenant deux accéléromètres (22A, 22B) fixés sur un support commun (14), chaque accéléromètre comprenant :
- une masse d'inertie (221) mobile parallèlement à l'axe de référence entre une position de repos intermédiaire et deux limites opposées,
- un circuit de test interne pour déplacer la masse d'inertie d'une position de repos vers une première des deux limites opposées dans une direction testable (DA, DB) en l'absence de vibration du support commun, et
- un moyen de détection (225) pour délivrer un signal d'accélération correspondant au déplacement de la masse d'inertie parallèlement à l'axe de référence, le signal d'accélération contenant une première partie de signal correspondant au déplacement de la masse d'inertie entre la position de repos intermédiaire et la première des deux limites opposées, et une deuxième partie de signal correspondant au déplacement de la masse d'inertie entre la position de repos intermédiaire et l'autre des deux limites opposées,
**caractérisé en ce que** les directions testables (DA, DB) des deux accéléromètres sont opposées l'une à l'autre.

2. Dispositif de suivi de vibrations selon la revendication 1, comprenant en outre une unité de traitement de signal (20) pour traiter les signaux d'accélération délivrés par les deux accéléromètres et pour mettre en oeuvre un algorithme de suivi d'instabilité délivrant un signal d'instabilité.

3. Dispositif de suivi de vibrations selon la revendication 2, pourvu en outre d'un moyen pour exécuter une procédure de test comprenant :
- l'activation du circuit de test interne des accéléromètres pour simuler une situation d'instabilité ;
- l'exécution de l'algorithme de suivi d'instabilité ;
- la délivrance d'un résultat de test positif si l'algorithme de suivi d'instabilité délivre un signal d'instabilité, sinon la délivrance d'un résultat de test négatif.

4. Dispositif de suivi de vibrations selon la revendication 3, dans lequel le moyen pour exécuter la procédure de test comprend une machine d'état (50).

5. Dispositif de suivi de vibrations selon l'une quelconque des revendications 2 à 4, dans lequel l'algorithme de suivi d'instabilité suit les premières parties de signal des deux signaux d'accélération, sans tenir compte des deuxièmes parties de signal des deux signaux d'accélération.

6. Dispositif de suivi de vibrations selon l'une quelconque des revendications 2 à 5, dans lequel l'unité de traitement de signal comprend un dispositif logique programmable (20) connecté aux deux accéléromètres (22A, 22B) et pourvu de blocs logiques rémanents fonctionnant simultanément en parallèle et mettant en oeuvre l'algorithme de suivi d'instabilité.

7. Dispositif de suivi de vibrations selon la revendication 6, dans lequel le dispositif logique programmable est un réseau prédiffusé programmable par l'utilisateur (FPGA) ou un dispositif logique programmable complexe (CPLD).

8. Dispositif de suivi de vibrations selon la revendication 6 ou 7, dans lequel le dispositif logique programmable comprend une mémoire rémanente effaçable et reprogrammable.

9. Dispositif de suivi de vibrations selon l'une quelconque des revendications 2 à 8, dans lequel l'algorithme de suivi d'instabilité comprend :
- le prétraitement du premier signal d'accélération,
- la détection de crêtes du signal d'accélération prétraité qui sont supérieures à un seuil d'accélération prédéterminé dans la direction testable,
- l'incrémentation d'un compteur si le temps entre deux crêtes consécutives est à l'intérieur d'une fenêtre de temps prédéterminée,
- l'activation du relais de sécurité à semiconducteurs si le compteur atteint ou dépasse un seuil de compteur prédéterminé, et
- la réinitialisation du compteur si aucune crête n'est détectée au cours d'une période de temps prédéterminée.

10. Dispositif de suivi de vibrations selon la revendication 9, dans lequel le prétraitement du premier signal d'accélération comprend le traitement du premier signal d'accélération à travers un filtre passe-bas et un filtre passe-haut.

11. Dispositif de suivi de vibrations selon l'une quelconque des revendications précédentes, dans lequel les deux accéléromètres (22A, 22B) sont identiques.

12. Bogie pourvu d'un dispositif de suivi de vibrations selon l'une quelconque des revendications 1 à 11.

13. Procédé de suivi de vibrations avec un dispositif de suivi de vibrations selon l'une quelconque des revendications 1 à 11, comprenant l'exécution d'un algorithme de suivi d'instabilité pour délivrer un signal d'instabilité, **caractérisé en ce que** l'algorithme de suivi suit les premières parties de signal des deux signaux d'accélération, sans tenir compte des deuxièmes parties de signal des deux signaux d'accélération.

14. Procédé de suivi de vibrations avec un dispositif de suivi de vibrations selon l'une quelconque des revendications 1 à 11, comprenant l'exécution d'un algorithme de suivi d'instabilité pour délivrer un signal d'instabilité, et en particulier un procédé selon la revendication 13, **caractérisé en ce qu'**il comprend en outre une procédure de test comprenant :
- l'activation du circuit de test interne des accéléromètres pour simuler une situation d'instabilité ;
- l'exécution de l'algorithme de suivi d'instabilité ;
- la délivrance d'un résultat de test positif si l'algorithme de suivi d'instabilité délivre un signal d'instabilité, sinon La délivrance d'un résultat de test négatif.

15. Procédé de suivi de vibrations avec un dispositif de suivi de vibrations selon l'une quelconque des revendications 1 à 11, comprenant l'exécution d'un algorithme de suivi d'instabilité pour délivrer un signal d'instabilité, et en particulier un procédé selon la revendication 13 ou 14, **caractérisé en ce qu'**il comprend en outre, pour chacun des signaux d'accélération :
- le prétraitement du signal d'accélération pour obtenir un signal d'accélération prétraité comprenant au moins une première partie correspondant à la première partie du signal d'accélération,
- la détection de crêtes de la première partie du signal d'accélération prétraité qui sont supérieures à un seuil d'accélération prédéterminé.

16. Procédé de suivi de vibrations avec un dispositif de suivi de vibrations selon l'une quelconque des revendications 1 à 11, comprenant l'exécution d'un algorithme de suivi d'instabilité pour délivrer un signal d'instabilité, et en particulier un procédé selon l'une quelconque des revendications 13 à 15, **caractérisé en ce qu'**il comprend en outre, pour chacun des signaux d'accélération :
- l'incrémentation d'un compteur si le temps entre deux crêtes consécutives est à l'intérieur d'une fenêtre de temps prédéterminée,
- la délivrance d'un signal d'instabilité si le compteur atteint ou dépasse un seuil de compteur prédéterminé, et
- la réinitialisation du compteur si aucune crête n'est détectée au cours d'une période de temps prédéterminée.
